**Europäisches Patentamt**

**European Patent Office**

**Office européen des brevets**

(19)

(11) Veröffentlichungsnummer: **0 281 932**

**A2**

# (12) EUROPÄISCHE PATENTANMELDUNG

(21) Anmeldenummer: **88103231.2**

(22) Anmeldetag: **03.03.88**

(51) Int. Cl.⁴: **A01C 7/04**

(30) Priorität: **13.03.87 DE 3708207**
**10.06.87 DE 3719270**

(43) Veröffentlichungstag der Anmeldung:
**14.09.88 Patentblatt 88/37**

(84) Benannte Vertragsstaaten:
**DE FR GB NL**

(71) Anmelder: **Amazonen-Werke H. Dreyer GmbH
& Co. KG
Am Amazonenwerk 9-13
D-4507 Hasbergen-Gaste(DE)**

(72) Erfinder: **Scheufler, Bernd, Dr.
Am Amazonenwerk 101
D-4507 Hasbergen(DE)**
Erfinder: **Kemper, Martin
Fontanestrasse 15
D-4506 Hagen a. TW(DE)**
Erfinder: **Vollmer, Hubert
Im Brook 1
D-4506 Hagen a. TW(DE)**

(54) **Verteilmaschine.**

(57) Verteilmaschine mit einem Rahmen und einem Vorratsbehälter, dem angetriebene Dosierorgane zugeordnet sind, die von einem regelbaren Antrieb angetrieben werden. Um in einfacher Weise sicherzustellen, daß bei der Unterbrechung des Ausbringvorganges, beispielsweise beim Wenden am Feldende automatisch der Antriebsmotor für die Dosierorgane abgeschaltet wird, ist vorgesehen, daß an der Antriebswelle (13) der Dosierorgane ein regelbarer Antriebsmotor (14) angeordnet ist, daß an dem Antriebsmotor (14) eine Abschalteinrichtung (16) angeordnet ist, die den Antriebsmotor (14) bei Unterbrechung des Ausbringvorganges automatisch abschaltet.

EP 0 281 932 A2

FIG.1

# Verteilmaschine

Die Erfindung betrifft eine Verteilmaschine mit einem Rahmen und einem Vorratsbehälter, dem angetriebene Dosierorgane zugeordnet sind, die von einem regelbaren Antrieb angetrieben werden.

Eine derartige, als pneumatische Einzelkornsämaschine ausgebildete Verteilmaschine ist bereits durch die DE-PS 35 30 514 bekannt. Diese Einzelkornsämaschine weist einen Vorratsbehälter, einen Rahmen sowie Laufräder auf, über die sich die Maschine auf dem Boden abstützt An der Vorderseite des Rahmens sind Dreipunktkupplungselemente angeordnet, mit denen die Maschine an den Dreipunktkraftheber eines Ackerschleppers angekuppelt werden kann. An der Rückseite des Rahmens sind die in aufrechter Ebene bewegbar in vier hintereinanderliegenden Querreihen angeordneten Säschare zum Einbringen des Saatgutes in den Boden angelenkt. Den Säscharen wird das Saatgut über den sich im unteren Bereich des Vorratsbehälters befindlichen Dosiermechanismus zugeführt. Dieser Dosiermechanismus weist zwei langgestreckte und drehbar gelagerte Vereinzelungstrommeln auf.

Der Antrieb dieser Trommeln erfolgt gemäß der Beispielbeschreibung dieses Patentes über einen nicht dargestellten regelbaren Antrieb. Dieser regelbare Antrieb wird von einem Laufrad - mit dem sich die Maschine auf dem Boden abstützt - und einem Regelgetriebe gebildet, wobei das Regelgetriebe von dem Laufrad angetrieben wird. Des weiteren wird erwähnt, daß der regelbare Antrieb auch von einem Elektromotor oder einem Ölmotor angetrieben werden kann. Erfolgt der Antrieb des regelbaren Antriebes gemäß des Ausführungsbeispieles von einem Laufrad der Maschine, führt ein Anheben der Maschine vom Boden, beispielsweise beim Wenden am Feldende, zu einer automatischen Unterbrechung der Rotation der Vereinzelungstrommeln, so daß der Dosiermechanismus kein Saatgut mehr ausbringt. Wird der regelbare Antrieb jetzt aber von einem Elektro-oder einem Ölmotor angetrieben, erfolgt beim Anheben der Maschine keine automatische Unterbrechung der Rotation der Vereinzelungstrommeln, so daß fälschlicher Weise Saatgut aus dem Vorratsbehälter ausgebracht und der Ausbringvorgang nicht unterbrochen wird.

Der Erfindung liegt daher die Aufgabe zugrunde, in einfacher Weise sicherzustellen, daß bei der Unterbrechung des Ausbringvorganges, beispielsweise beim Wenden am Feldende, automatisch der Antriebsmotor für die Dosierorgane abgeschaltet wird.

Diese Aufgabe wird in erfindungsgemäßer Weise dadurch gelöst, daß an dem Antriebsmotor der Dosierorgane ein regelbarer Antriebsmotor angeordnet ist, daß an dem Antriebsmotor eine Abschalteinrichtung angeordnet ist, die den Antriebsmotor bei Unterbrechung des Ausbringvorganges automatisch abschaltet. Infolge dieser Maßnahmen wird der Ausbringvorgang auch bei Maschinen automatisch unterbrochen, deren Dosierorgane nicht von einem sich in Betriebsstellung auf dem Boden abrollenden Rad angetrieben werden, sondern deren Antrieb über einen regelbaren Antriebsmotor erfolgt.

Zur Unterbrechung der Saatgut-bzw. der Düngemittelzufuhr zu den entsprechenden Verteilorganen einer Verteilmaschine, während einer Unterbrechung des Ausbringvorganges, wobei die Laufräder der Maschine in Außerbetriebsstellung während der Unterbrechung des Ausbringvorganges überführt werden, ist in erfindungsgemäßer Weise vorgesehen, daß an dem Laufrad der Maschine oder an einem anderen Laufrad ein Sensor angeordnet ist, daß der Sensor die Fahrgeschwindigkeit bzw. das Rollen oder Nichtrollen der Räder feststellt, daß dieser Sensor mit der Abschalteinrichtung des Antriebsmotors verbunden ist und den Antriebsmotor bei Nichtrollen der Räder abschaltet. Hierbei kann es evtl. auch sinnvoll sein, wenn der an dem Laufrad angeordnete Sensor die Fahrgeschwindigkeit ermittelt, daß ein Unterschreiten eines bestimmten Fahrgeschwindigkeitswertes zu einer automatischen Unterbrechung des Antriebes für die Dosierorgane führt.

In einer weiteren Ausführungsform zur Unterbrechung des Dosierorganantriebes beim Unterbrechen des Ausbringvorganges ist erfindungsgemäß vorgesehen, daß bei an einem Dreipunktkraftheber eines Ackerschleppers angeordneten Maschinen an dem Dreipunktkraftheber des Schleppers ein oder mehrere Sensoren angeordnet sind, daß diese Sensoren mit der Abschalteinrichtung verbunden sind, und daß diese Sensoren beim Anheben oder Absenken des Dreipunktkrafthebers entsprechende Signale an die Abschalt-oder Einschalteinrichtung des Antriebsmotors übermitteln und den Antriebsmotor beim Anhalten der Maschine abschalten.

Das automatische Unterbrechen des Dosierorganantriebes während einer Unterbrechung des Ausbringvorganges, beispielsweise beim Wenden am Feldende, läßt sich auf alle Verteilmaschine übertragen, deren Dosiereinrichtungen von einem regelbaren Antriebsmotor angetrieben werden. Diese Verteilmaschinen können verschiedenartig ausgebildet sein. Beispielsweise kann es sich bei diesen Maschinen um pneumatische Verteilmaschinen wie Düngerstreuer, Einzelkorndrillmaschinen mit mehreren nebeneinander angeordneten Einzelkornsägeräten oder Sämaschinen gemäß des Standes der Technik handeln.

Um in vorteilhafter Weise die Regelung des Antriebsmotors beim Abschalten des Antriebsmotors beim Unterbrechen des Ausbringvorganges weiterzubilden, ist erfindungsgemäß vorgesehen, daß eine Regeleinrichtung für den Antriebsmotor vorgesehen ist, daß über die Regeleinrichtung der Antriebsmotor in einem Regelkreis angeordnet ist, dessen Führungsgröße die aktuelle Fahrgeschwindigkeit der Verteilmaschine während des Ausbringvorganges ist, daß bei Abschalten des Antriebsmotors die Regelung für den Antriebsmotor unterbrochen und/oder abgeschaltet wird.

Infolge dieser Maßnahmen wird erreicht, daß die Regeleinrichtung des Antriebsmotors die Stellung beibehält, die sie unmittelbar vor Beendigung des Ausbringvorganges gehabt hat, so daß dann bei Wiederaufnahme des Ausbringvorganges ohne eine lange Totzeit der Ausbringvorgang mit der gewünschten Einstellung fortgesetzt werden kann. Es wird also durch die erfindungsgemäße Maßnahme vermieden, daß beim Unterbrechen des Ausbringvorganges, wenn die Fahrgeschwindigkeit 0 wird, ebenfalls aufgrund dessen, daß die Fahrgeschwindigkeit 0 (also Stillstand), da die Fahrgeschwindigkeit die Führungsgröße für den Regelkreis der Regeleinrichtung ist, die Regeleinrichtung ebenfalls bis zum Stillstand des Antriebsmotors heruntergeregelt und anschließend bei Beginn des Ausbringvorganges wieder hochgeregelt werden muß, bis zu der gewünschten Stellung, entsprechend der Sollausbringmenge. Durch die erfindungsgemäße Maßnahme entfällt also diese neue Einregelung über die lange Totzeit, da bei Abschalten des Antriebsmotors die Regelung für den Antriebsmotor unterbrochen und/oder abgeschaltet wird.

Bei einer Verteilmaschine, bei der der Antriebsmotor als Hydromotor ausgebildet ist, ist erfindungsgemäß vorgesehen, daß vor dem Hydromotor in der zu dem Hydromotor führenden Drucköllleitung ein Dreiwegestromregelventil angeordnet ist, dessen Stellmotor über den Regelkreis geregelt wird, daß weiterhin in der zu dem Hydromotor führenden Drucköllleitung die als Wegeventil ausgebildete Abschalteinrichtung angeordnet ist, daß beim Abschalten der Druckölzufuhr zu dem Hydromotor über das Wegeventil gleichzeitig der Regelkreis für den Stellmotor des Regelventils abgeschaltet wird. Infolge dieser Maßnahme wird also bei dieser Ausbildung der Regelung gleichzeitig die Regelung für den Stellmotor automatisch unterbrochen, bei der Unterbrechung des Ausbringvorganges, so daß das Regelventil die Einstellung beibehält und, wenn der Ausbringvorgang unterbrochen wird nicht gegen 0 geregelt wird, so daß bei Wiederaufnahme des Ausbringvorganges sofort wieder - und zwar ohne Totzeit - die Sollmenge ausgebracht werden kann.

In einfacher Weise kann hierbei der Regelkreis derart unterbrochen werden, daß bei Abschalten der Druckölzufuhr zu dem Hydraulikzylinder gleichzeitig die Stromzufuhr zu dem Stellmotor abgeschaltet wird. Des weiteren ist erfindungsgemäß vorgesehen, daß bei Abschalten der Regelung für den Antriebsmotor die letzte aktuelle Stellung des Regelventils bzw. Stellmotors vor dem unmittelbaren Unterbrechen des Ausbringvorganges gespeichert und/oder beibehalten wird. Diese Speicherung erfolgt auch in vorteilhafter Weise in der elektronischen Schaltung, so daß bei Beginn des Ausbringvorganges ohne große Regelschwingungen die elektronische Einrichtung die Regelung des Antriebsmotors wieder vornehmen kann.

In einer weiteren Ausbildung der Erfindung ist bei einer Verteilmaschine, die an dem Dreipunktkraftheber eines Schleppers angeordnet ist, erfindungsgemäß vorgesehen, daß in der Druckölleitung des Dreipunktkrafthebers des Ackerschleppers ein Sensor angeordnet ist, der ein Signal erzeugt, wenn die Verteilmaschine zur Unterbrechung des Ausbringvorganges angehoben oder zum Ausbringen abgesenkt wird, daß entsprechend dieses Signales der Regelkreis für den Stellmotor des Regelventils ab-oder eingeschaltet wird und zwar derart, daß beim Ausheben der Regelkreis aus-und beim Absenken eingeschaltet wird Infolge dieser Maßnahme wird die Regelung für den Antriebsmotor automatisch beim Ausheben der Verteilmaschine über den Dreipunktkraftheber unterbrochen, wenn über die separate Abstelleinrichtung ebenfalls automatisch der Antriebsmotor für die Dosierorgane abgeschaltet wird.

Weitere Einzelheiten der Erfindung sind der Beispielsbeschreibung und den Zeichnungen zu entnehmen. Hierbei zeigt

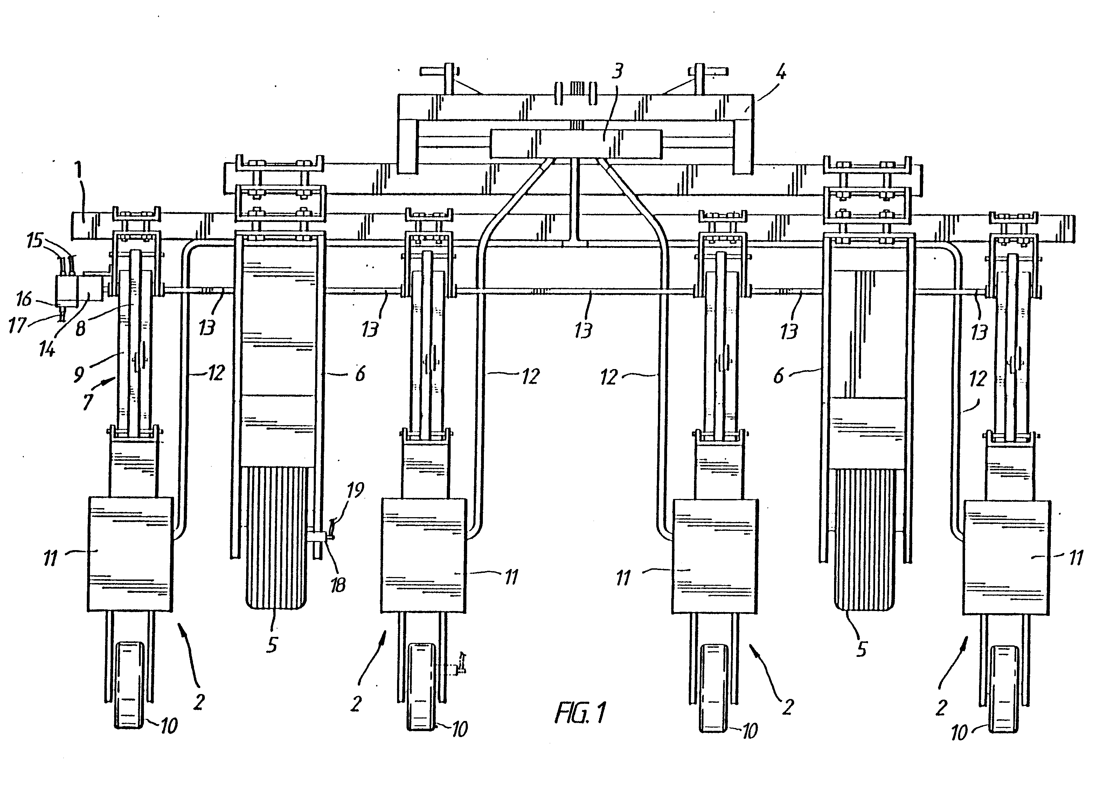

Fig. 1 die als Einzelkorndrillmaschine in erfindungsgemäßer Weise ausgebildete Verteilmaschine in Prinzipdarstellung in der Ansicht von oben,

Fig. 2 eine weitere erfindungsgemäß ausgebildete Verteilmaschine in der Draufsicht und

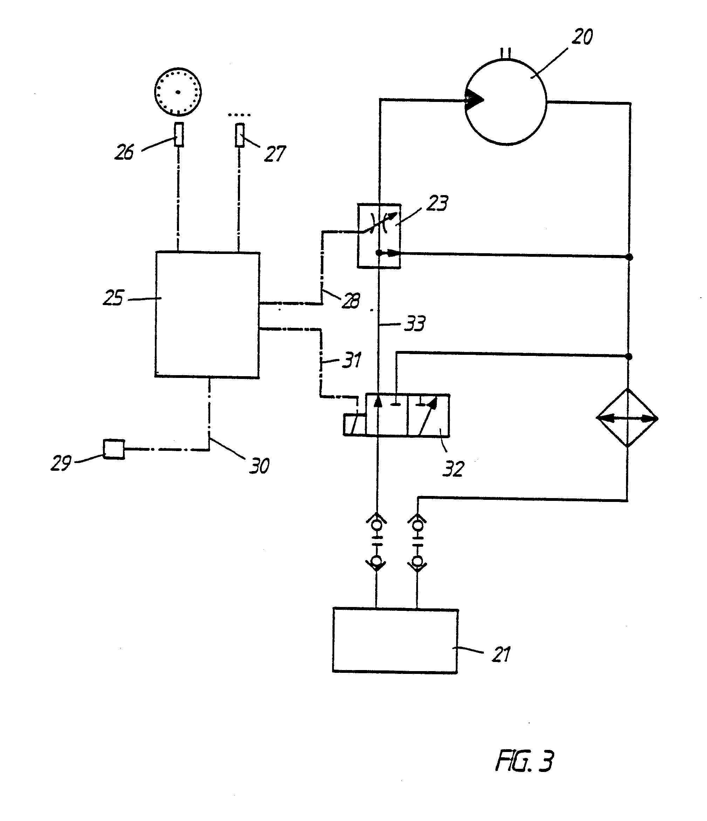

Fig. 3 das Blockschaltbild der elektronisch hydraulischen Regelung.

In der Beispielsbeschreibung ist die Verteilmaschine beispielhaft als Einzelkorndrillmaschine ausgebildet. Die Einzelkorndrillmaschine weist den Tragrahmen 1 auf, an dem die einzelnen Einzelkornsägeräte 2, das Saugluftgebläse 3 sowie der Dreipunktanbaubock 4 zum Anbau an einen Schlepperkraftheber sowie die Laufräder 5, angeordnet sind. Während des Betriebes stützt sich die Einzelkorndrillmaschine über die Laufräder 5 auf dem Boden ab.

Die Laufräder 5 sind in den Tragarmen 6 jeweils drehbar gelagert. Diese Tragarme 6 sind jeweils zwischen zwei Einzelkornsägeräte 2 an dem Tragrahmen 1 mit Schrauben festgeklemmt. Die Einzelkornsägeräte 2 sind mit der parallelogrammartigen Halterung 7 jeweils an dem Tragrahmen 1 in aufrechter Ebene bewegbar angelenkt. Die parallelogrammartige Halterung 7 weist jeweils den Oberlenker 8 und den Unterlenker 9 auf. Hinter den Einzelkornsägeräten 2 ist jeweils die höheneinstellbare Tiefenführungs - und Druckrolle 10 angeordnet, mit der die Eindringtiefe der Säschare der Einzelkorngeräte 2 in den Boden bestimmt wird.

Die Einzelkornsägeräte 2 weisen den Vorratsbehälter 11 auf, von dem aus das sich in dem Vorratsbehälter 11 befindliche Saatgut zu dem jeweiligen Vereinzelungsorgan des jeweiligen Einzelkornsägerätes 2 gelangt. Die Vereinzelung des Saatgutes durch das Vereinzelungsorgan erfolgt in bekannter und daher nicht näher erläuteter Weise. Jedes Vereinzelungsorgan wird von dem Saugluftgebläse 3 über die Schlauchleitung 12 mit Saugluft beaufschlagt. Der Antrieb der jeweils unterhalb des Vorratsbehälter 11 angeordneten Vereinzelungsorgane erfolgt von der zentralen Antriebswelle 13 über eine in dem Unterlenker 9 angeordnete Antriebsvorrichtung Der Antrieb der zentralen Antriebswelle 13 erfolgt über den Hydraulikmotor 14, der an die Antriebswelle 13 angeflanscht ist. Über die Hydraulikschläuche 15 läßt sich der Hydraulikmotor 14 mit dem Hydrauliksystem des die Einzelkorndrillmaschine transportierenden Ackerschleppers verbinden, so daß eine Beaufschlagung des Hydraulikmotors 14 mit Hydraulikol zum Antrieb der Vereinzelungsorgane der Einzelkornsägeräte 2 führt. Der Hydraulikmotor 14 weist den angeflanschten Steuerblock 16 auf, in dem ein über einen Eiektromotor zu verstellendes Hydraulikmengenventil angeordnet ist. Die Ansteuerung des Steuerblockes 16 erfolgt über das Kabel 17, das mit dem Mikroprozessor des auf dem Ackerschlepper angeordneten elektronischen Dosiergerätes verbunden ist.

Diesem Dosiergerät werden verschiedene Informationen wie beispielsweise die momentane Fahrgeschwindigkeit oder die momentane Anzahl der pro Flächeneinheit ausgesäten Saatkörner übermittelt. Mittels des Mikroprozessors des Dosiergerätes erfolgt eine Regelung der gewünschten Ausbringmenge pro Flächeneinheit in Abhängigkeit von der Fahrgeschwindigkeit. Durch Veränderung der Drehzahl der zentralen Antriebswelle 13 über den Hydraulikmotor 14 läßt sich der Ablegeabstand der einzelnen Saatkörner zueinander stufenlos variieren, so daß ein Verändern der pro Flächeneinheit ausgebrachten Saatkörner in besonders einfacher Weise möglich ist.

Das Einstellen der pro Flächeneinheit auszusäenden Saatkörner erfolgt mittels des elektronischen Dosiergerätes. Zu Beginn der Säarbeit braucht der Landwirt nur die von ihm gewünschte Anzahl der pro Flächeneinheit auszusäenden Saatkörner, unter Berücksichtigung der Reihenweite von beispielsweise 90.000 Saatkörner pro Hektar, über die entsprechenden Tasten des Dosiergerätes in den Mikroprozessor einzugeben, und es erfolgt eine automatische, entsprechende Einstellung des Hydraulikmotors 14. Dieser eingestellte Wert wird während des Sävorganges ständig überwacht und ein Nichteinhalten der gewünschten Aussaatmenge führt sofort zu einer entsprechenden Verstellung des Hydraulikmotors 14, so daß stets die pro Flächeneinheit gewünschte Anzahl der Saatkörner eingehalten wird. Dieser eingegebene Ausbringmengenwert läßt sich während des Sävorganges beliebig verändern, so daß eine optimale Anpassung der erforderlichen Saatgutmenge an die jeweiligen Bodenverhältnisse erfolgen kann.

Zur automatischen Unterbrechung des Antriebes der Vereinzelungsorgane beim Unterbrechen des Ausbringvorganges, beispielsweise beim Wenden am Feldende zudem die Maschine ausgehoben wird, oder bei einem sonstigen Stillstand der Maschine ist der Sensor 18 am Tragarmen 6 befestigt und wirkt mit dem drehbar in dem Tragarmen 6 gelagerten Laufrad 5 zusammen. Dieser Sensor 18 ist über das Kabel 19 mit dem auf dem nicht dargestellten Schlepper angeordneten Dosiergerät verbunden, stellt das Rollen oder Nichtrollen des Rades 5 fest und liefert über das Kabel 19 entsprechende Informationen an das Dosiergerät. Bei einem Stillstand des Laufrades 5 erfolgt eine entsprechende Ansteuerung des Steuerblockes 16 des Hydraulikmotors 14, so daß die Ölzufuhr zu dem Hydraulikmotor 14 unterbrochen wird und die Vereinzelungsorgane nicht mehr über die zentrale Antriebswelle 13 angetrieben werden. Es wird also kein Saatgut mehr ausgebracht. Nachdem die Laufräder 5 wieder rotieren, werden die Vereinzelungsorgane der Einzelkornsägeräte 2 wieder ordnungsgemäß angetrieben, so daß Saatgut ausgebracht wird. Der Sensor 18 zur Feststellung der Rotation eines Rades, kann wie mit strichpunktierten Linien dargestellt, auch beispielsweise an der Tiefenführungs-und Druckrolle 10 angeordnet sein.

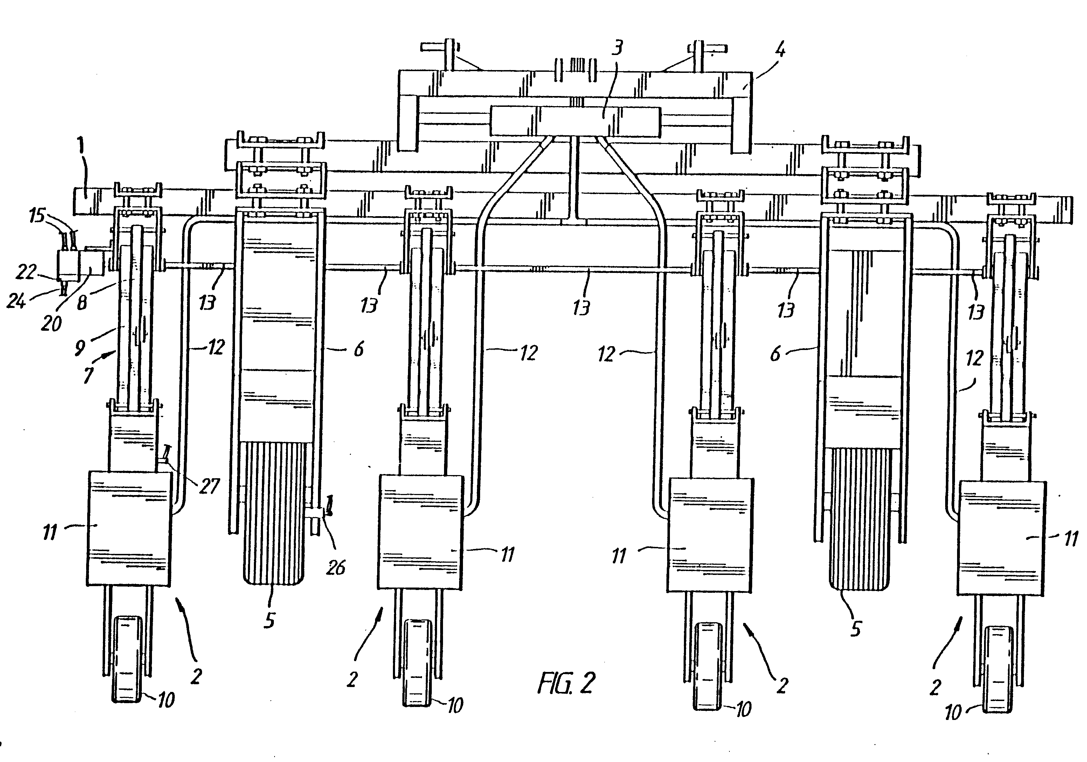

Die Einzelkorndrillmaschine gemäß Fig. 2 weist den Tragrahmen 1 auf, an dem die einzelnen Einzelkornsägeräte 2, das Saugluftgebläse 3 sowie der Dreipunktanbaubock 4 zum Anbau an einen Schlepperkraftheber sowie die Laufräder 5, angeordnet sind. Während des Betriebes stützt sich die Einzelkorndrillmaschine über die Laufräder 5 auf dem Boden ab.

Die Laufräder 5 sind in den Tragarmen 6 jeweils drehbar gelagert. Diese Tragarme 6 sind jeweils zwischen zwei Einzelkornsägeräte 2 an dem Tragrahmen 1 mit Schrauben festgeklemmt. Die Einzelkornsägeräte 2 sind mit der parallelogrammartigen Halterung 7 jeweils an dem Tragrahmen 1 in aufrechter Ebene bewegbar angelenkt. Die parallelogrammartige Halterung 7 weist jeweils den Oberlenker 8 und den Unterlenker 9 auf. Hinter den Einzelkornsägeräten 2 ist jeweils die höheneinstellbare Tiefenführungs - und Druckrolle 10 angeordnet, mit der die Eindringtiefe der Säschare der Einzelkorngeräte 2 in den Boden bestimmt wird.

Die Einzelkornsägeräte 2 weisen den Vorratsbehälter 11 auf, von dem aus das sich in dem Vorratsbehälter 11 befindliche Saatgut zu dem jeweiligen Vereinzelungsorgan des jeweiligen Einzelkornsägerätes 2 gelangt. Die Vereinzelung des Saatgutes durch das Vereinzelungsorgan erfolgt in bekannter und daher nicht näher erläuteter Weise. Jedes Vereinzelungsorgan wird von dem Saugluftgebläse 3 über die Schlauchleitung 12 mit Saugluft beaufschlagt. Der Antrieb der jeweils unterhalb des Vorratsbehälter 11 angeordneten Vereinzelungsorgane erfolgt von der zentralen Antriebswelle 13 über eine in dem Unterlenker 9 angeordnete Antriebsvorrichtung. Der Antrieb der zentralen Antriebswelle 13 erfolgt über den als Hydraulikmotor 20 ausgebildeten Antriebsmotor, der an die Antriebswelle 13 über eine Kupplung angeflanscht ist. Über die Hydraulikschläuche 15 läßt sich der Hydraulikmotor 20 mit dem Hydrauliksystem 21 des die Einzelkorndrillmaschine ziehenden Ackerschleppers verbinden, so daß eine Beaufschlagung des Hydraulikmotors 20 mit Hydrauliköl zum Antrieb der Vereinzelungsorgane der Einzelkornsägeräte 2 führt. Der Hydraulikmotor 20 weist den angeflanschten Steuerblock 22 auf, der ein über einen Elektromotor zu verstellendes als Dreiwegstromventil 23 Hydraulikmengenventil aufweist. Die Ansteuerung des Steuerblockes 22 erfolgt über welches Kabel 24, das mit dem Mikroprozessor der auf dem Ackerschlepper angeordneten elektronischen Einrichtung 25, die eine Anzeige und ein Bedienungsfeld aufweist, verbunden ist. Diese Einrichtung 25 ist als Regeleinrichtung ausgebildet.

Dieser Einrichtung 25 werden die verschiedenen Informationen wie beispielsweise die momentane Fahrgeschwindigkeit über die Sensoreinheit 26 oder die momentane Anzahl der pro Flächeneinheit ausgesäten Saatkörner mittels des Sensors 27 übermittelt. Mittels des Mikroprozessors der Einrichtung 25 erfolgt eine Regelung der gewünschten Ausbringmenge pro Flächeneinheit in Abhängigkeit von der Fahrgeschwindigkeit. Durch Veränderung der Drehzahl des die zentrale Antriebswelle 13 antreibenden Hydraulikmotor 20 über das Dreiwegestromventil 23 läßt sich der Ablegeabstand der einzelnen Saatkörner zueinander stufenlos variieren, so daß ein Verändern der pro Flächeneinheit ausgebrachten Saatkörner in besonders einfacher Weise möglich ist. Hierbei wird das Dreiwegestromventil 23 von über Eilektromotor der über die Streuleitung 28 von der Einrichtung 25 gesteuert wird, entsprechend nachgeregelt bzw. verstellt.

Das Einstellen der pro Flächeneinheit auszusäenden Saatkörner erfolgt mittels der elektronischen Einrichtung 25. Zu Beginn der Säarbeit braucht der Landwirt nur die von ihm gewünschte Anzahl der pro Flächeneinheit auszusäenden Saatkorner, unter Berücksichtigung der Reihenweite von beispielsweise 90.000 Saatkörner pro Hektar, über die entsprechenden Tasten des Bedienungsfeldes der Einrichtung 25 in den Mikroprozessor einzugeben, und es erfolgt automatisch eine entsprechende Einstellung des Hydraulikmotors 20 über das Dreiwegstromregelventil 23. Dieser eingestellte Wert wird während des Sävorganges ständig mittels des Sensors 27 und der Sensorik 26 in der Einrichtung 25 überwacht und ein Nichteinhalten der gewünschten Aussaatmenge führt sofort zu einer entsprechenden Verstellung des Dreiwegestromregelventils 23, so daß stets die pro Flächeneinheit gewünschte Anzahl der Saatkörner bzw. die Solldrehzahl des Hydraulikmotors 20 eingehalten wird. Dieser eingegebene Ausbringmengenwert läßt sich während des Sävorganges beliebig verändern, so daß eine optimale Anpassung der erforderlichen Saatgutmenge an die jeweiligen Bodenverhältnisse erfolgen kann.

Zur automatischen Unterbrechung des Antriebes der Vereinzelungsorgane beim Unterbrechen des Ausbringvorganges, beispielsweise beim Wenden am Feldende zu dem die Maschine ausgehoben wird, wird über den in der Druckleitung des Dreipunktkrafthebers des Schleppers angeordneten Sensor 29, der über die Leitung 30 mit der Einrichtung 25 verbunden, ein Signal abgegeben, oder bei einem sonstigen Stillstand der Maschine wird über den Sensor 26 ein entsprechendes Signal an die Einrichtung 25 abgegeben. Aufgrund eines dieser beiden Signale von den Sensoren 29 und 26, wird bei einer Unterbrechung des Ausbringvorganges automatisch von die Einrichtung 25 über die Leitung 31 in dem Kabel 24 der Steuerblock 22 angesteuert und die Ölzufuhr zu dem Hydraulikmotor 20 unterbrochen, so daß die Vereinzelungsorgane nicht mehr über die zentrale Antriebswelle 13 angetrieben werden. Es wird als kein Saatgut mehr ausgebracht. Hierzu weist der Steuerblock das Wegeventil 32 (vgl. Blockschaltbild Fig. 2) auf, welches als 3/2 Wegeventil mit einer elektromagnetischen Betätigung ausgebildet ist und in der zu dem Hydromotor 20 führenden Druckölleitung 33 angeordnet ist. Dieses Wegeventil 32 bildet die - schnelle und schlagartige Abschalteinrichtung für den Hydraulikmotor 20 bei Unterbrechen des Ausbringvorganges. Wenn der Ausbringvorgang fortgesetzt wird und die Maschine über den Dreipunktkraftheber des Schleppers abgesenkt ist, bzw. die Fahrgeschwindigkeitssensorik 26 Signale liefert, daß die Ausbringarbeit fortgesetzt wird, wird von der Einrichtung 25 das Wegeventil 32 über die Leitung 31 geschaltet, damit wieder Drucköl über die Drucköleitung 33 und das Regelventil 23 dem Hydraulikmotor 20 zugeführt wird. Somit treibt der Hydraulikmotor 20 wieder die Dosierorgane an. Bei Abschalten des Hydraulikmotors 20 durch die Einrichtung 25 über das Wegeventil 32 wird die Regelung für das Dreiwegestromregelventil 23 automatisch unterbrochen. Diese Regelung wird automatisch wieder eingeschaltet, wenn durch die Einrichtung 25 über das Wegeventil 32 die Drucölzufuhr zu dem Hydraulikmotor 20 wieder eingeschaltet wird. Dieses soll im folgenden noch näher erläutert werden:

Wie bereits vor ausgeführt, wird die Drehzahl des Hydromotors 20 über das Dreiwegestromregelventil 23 eingestellt und bestimmt, in dem von der Einrichtung 25 aufgrund der dieser Einrichtung 25 vorliegenden Informationen und Angaben von Sollmenge, Fahrgeschwindigkeit etc. über die Steuerleitung 28 das Regelventil 23 entsprechend angesteuert wird und über den dem Regelventil 23 zugeordneten elektrischen Stellmotor entsprechend eingeregelt bzw. eingestellt wird. Der Einrichtung 25 werden von der Sensorik 26, welche über bekannte und daher nicht näher dargestellte Einrichtungen die aktuelle Fahrgeschwindigkeit der Verteilmaschine ermittelt, Informationen über die aktuelle Fahrgeschwindigkeit zugeführt. Des weiteren werden der Einrichtung 25 über die Sensorik 27, die an den Dosierorganen angeordnet ist, die tatsächliche Drehzahl der Dosierorgane bzw. Signale oder Informationen über die tatsächliche Anzahl oder Menge von Material zugeleitet. Außerdem kann noch ein Sensor 29, der in der Drucköleitung des Dreipunktkrafthebers des Schleppers angeordnet ist, vorhanden sein, der über die Leitung 30 mit der Einrichtung 25 verbunden sein, der Einrichtung 25 meldet, ob die Verteilmaschine abgesenkt oder angehoben ist. Somit wird aufgrund des Signals des Sensors 25 bei angehobener Verteilmaschine der Hydraulikmotor ab-und bei abgesenkter Verteilmaschine eingeschaltet. Der Antriebsmotor 20 ist über die als Regeleinrichtung ausgebildete Einrichtung 25 und dem Dreistromregelventil 23 in einem Regelkreis angeordnet, dessen Führungsgröße die aktuelle Fahrgeschwindigkeit während des Ausbringvorganges ist. Diese Regelung ist nun derart ausgelegt, daß bei einem Abschalten des Antriebsmotors 20 durch die Einrichtung 25 über das Wegeventil 32, die Regelung über den Antriebsmotor 20 gleichzeitig unterbrochen und abgeschaltet wird. Dies bedeutet also, daß, wenn die Verteilmaschine ausgehoben bzw. angehalten wird, die Regelung des Dreistromregelventils 23 unterbrochen wird, in dem in einfachster Weise die Stromzufuhr zu dem Stellmotor des Dreiwegestromregelventils 23 unterbrochen wird. Somit wird also bei Unterbrechung des Ausbringvorganges der Hydraulikmotor 20 nicht über das Dreiwegestromregelventil 23 bis zum Stillstand geregelt, sondern es erfolgt eine plötzliche Abschaltung der Drucöolzufuhr zu dem Hydraulikmotor 20 über das Wegeventil 32 und gleichzeitig wird der Regelkreis für den Stellmotor des Dreiwegestromregelventils 23 abgeschaltet, wenn die Drucölzufuhr zu dem Hydromotor 20 über das Wegeventil 32 unterbrochen wird. Es wird also beim Abschalten der Regelung für den Antriebsmotor 20 die letzte aktuelle Stellung des Regelventils 23 bzw. des Stellmotors vor dem unmittelbaren Unterbrechen des Ausbringvorganges beibehalten. Gleichzeitig wird diese letzte Stellung in dem Mikroprozessor der Einrichtung 25 gespeichert. Wenn nun der Ausbringvorgang wieder fortgesetzt wird, wird über die Fahrgeschwindigkeitssensorik 26 und/oder dem Sensor 29, der in der Drucköleitung des Dreipunktkrafthebers des Ackerschleppers angeordnet ist, ein entsprechendes Signal an die Einrichtung 25 übermittelt, durch welches der Einrichtung 25 mitgeteilt wird, daß der Ausbringvorgang wieder fortgesetzt wird. Aufgrund dieses Signales wird dann von der Einrichtung 25 über die Steuerleitung 31 das Wegeventil 32 derart geschaltet, daß die Öldruckzufuhr zu dem Hydraulikmotor 20 über das Regelventil 23 wieder gewährleistet ist. Gleichzeitig wird die Regelung wieder eingeschaltet, so daß das Regelventil 23 entsprechend von der Einrichtung 25 geregelt wird. Da das Regelventil 23 in der letzten vor dem Ausbringvorgang aktuellen Stellung geblieben ist, wird sofort bei Beginn des Ausbringvorganges, ohne daß das Regelventil 23 über einen langen Stellweg erst wieder auf die Sollausbringmenge eingeregelt werden muß, sofort die Sollausbringmenge ausgebracht, da der Hydraulikmotor 20 sehr schnell, praktisch schlagartig wieder die Solldrehzahl einnehmen kann.

## Ansprüche

1. Verteilmaschine mit einem Rahmen und einem Vorratsbehälter, dem angetriebene Dosierorgane zugeordnet sind, die von einem regelbaren Antrieb angetrieben werden, dadurch gekennzeichnet, daß an der Antriebswelle (13) der Dosierorgane ein regelbarer Antriebsmotor (14) angeordnet ist, daß an dem Antriebsmotor (14) eine Abschalteinrichtung (16) angeordnet ist, die den Antriebsmotor (14) bei Unterbrechung des Ausbringvorganges automatisch abschaltet.

2. Maschine nach Anspruch 1, dadurch gekennzeichnet, daß an dem Laufrad (5) der Maschine oder an einem anderen Laufrad ein Sensor (18) angeordnet ist, daß der Sensor (18) die Fahrgeschwindigkeit bzw. das Rollen oder Nichtrollen der Räder (5) feststellt, daß dieser Sensor (18) mit der Abschalteinrichtung (16) des Antriebsmotors (14) gekoppelt ist und den Antriebsmotor (14) bei Nichtrollen der Räder (5) abschaltet.

3. Maschine nach Anspruch 1, wobei die Maschine an den Dreipunktkraftheber eines Ackerschleppers angeordnet ist, dadurch gekennzeichnet, daß an dem Dreipunktkraftheber des Schleppers ein oder mehrere Sensoren angeordnet sind, daß diese Sensoren mit der Abschalteinrichtung verbunden sind, und daß diese Sensoren beim Anheben oder Absenken des Dreipunktkrafthebers entsprechende Signale an die Abschalt-oder Einschalteinrichtung (16) des Antriebsmotors (14) übermitteln und den Antriebsmotor (14) beim Anheben der Maschine abschalten.

4. Verteilmaschine mit einem Rahmen und einem Vorratsbehälter, dem angetriebene Dosierorgane zugeordnet sind, insbesondere nach Anspruch 1, dadurch gekennzeichnet, daß eine Regeleinrichtung für den Antriebsmotor (20) vorgesehen ist, daß über die Regeleinrichtung (23,25) der Antriebsmotor (20) in einem Regelkreis angeordnet ist, dessen Führungsgröße die aktuelle Fahrgeschwindigkeit der Verteilmaschine während des Ausbringvorganges ist, daß bei Abschalten des Antriebsmotors (20) die Regelung für den Antriebsmotor (20) unterbrochen und/oder abgeschaltet wird.

5. Verteilmaschine nach Anspruch 1 und 4, wobei der Antriebsmotor als Hydromotor ausgebildet ist, dadurch gekennzeichnet, daß vor dem Hydromotor (20) in der zu dem Hydromotor (20) führenden Drucköleitung (33) ein Dreiwegestromregelventil (33) angeordnet ist, dessen Stellmotor über den Regelkreis geregelt wird, daß weiterhin in der zu dem Hydromotor (20) führenden Drucköleitung (33) die als Wegeventil (32) ausgebildete Abschalteinrichtung angeordnet ist, daß beim Abschalten der Druckölzufuhr zu dem Hydromotor (20) über das Wegeventil (32) gleichzeitig der Regelkreis für den Stellmotor des Regelventils (23) abgeschaltet wird.

6. Verteilmaschine nach Anspruch 5, dadurch gekennzeichnet, daß bei Abschalten der Druckölzufuhr zu dem Hydraulikmotor (20) gleichzeitig die Stromzufuhr zu dem Stellmotor abgeschaltet wird.

7. Verteilmaschine nach Anspruch 1 und 4, dadurch gekennzeichnet, daß bei dem Abschalten der Regelung für den Antriebsmotor (20) die letzte aktuelle Stellung des Regelventils (23) bzw. des Stellmotors vor dem unmittelbaren Unterbrechen des Ausbringvorganges gespeichert und/oder beibehalten wird.

8. Verteilmaschine nach Anspruch 1 und 4, wobei die Verteilmaschine an der Dreipunktkraftheber eines Ackerschleppers angeordnet ist, dadurch gekennzeichnet, daß in der Drucköllleitung des Dreipunktkrafthebers des Ackerschleppers ein Sensor (29) angeordnet ist, der ein Signal erzeugt, wenn die Verteilmaschine zur Unterbrechung des Ausbringvorganges angehoben oder zum Ausbringen abgesenkt wird, daß entsprechend dieses Signales der Regelkreis für den Stellmotor des Regelventils (23) aboder eingeschaltet wird und zwar derart, daß beim Ausheben der Regelkreis aus-und beim Absenken eingeschaltet wird.

FIG. 1

0 281 932

Amazonen-Werke H.Dreyer GmbH & Co.KG

FIG. 2

Amazonen-Werke H. Dreyer GmbH & Co. KG

0 281 932

FIG. 3